Europäisches Patentamt

European Patent Office

Office européen des brevets

(11) Publication number: **0 503 093 A1**

# EUROPEAN PATENT APPLICATION
## published in accordance with Art. 158(3) EPC

(21) Application number: 91917064.7

(22) Date of filing: **03.10.91**

(86) International application number:
**PCT/JP91/01343**

(87) International publication number:
**WO 92/06529 (16.04.92 92/09)**

(51) Int. Cl.5: **H02K 9/19**

(30) Priority: **03.10.90 JP 263743/90**

(43) Date of publication of application:
**16.09.92 Bulletin 92/38**

(84) Designated Contracting States:
**DE IT**

(71) Applicant: **FANUC LTD.**
**3580, Shibokusa Aza-Komanba, Oshino-mura Minamitsuru-gun, Yamanashi 401-05(JP)**

(72) Inventor: **NAKAMURA, Kosei, Fanuc Dai-3 Vira-karamatsu**
**3527-1, Shibokusa Oshino-mura Minamitsuru-gun Yamanashi 01-05(JP)**
Inventor: **KATSUZAWA, Yukio 1915-5, Funatsu Kawaguchiko-machi Minamitsuru-gun Yamanashi 401-03(JP)**
Inventor: **NAKAZAWA, Yasuyuki Fanuc Dai-3 Vira-karamatsu**
**3527-1, Shibokusa Oshino-mura Minamitsuru-gun Yamanashi 401-05(JP)**

(74) Representative: **Otte, Peter, Dipl.-Ing.**
**Tiroler Strasse 15**
**W-7250 Leonberg(DE)**

(54) **LIOUID COOLING DEVICE OF MOTOR.**

(57) A liquid cooling device of a motor which can effectively cool the stator core of a motor and can keep high sealability without lowering rigidity of a motor housing. This device includes a stator core (14) so disposed as to encompass the rotor (10) of the motor, and produced by laminating a plurality of thin sheets (22) made of a magnetic material and bonding them by a resin material, a front housing (16) and a rear housing (18) disposed respectively at the front and rear end portions of the motor in its axial direction, supporting the rotary shaft (12) of the rotor (10) and clamping the stator core (14), a plurality of tie bolts (34) for fastening the front housing (16) and the rear housing (18) while pulling them toward each other and fixing them to the stator core (14), and a plurality of cooling liquid passages (28) defined inside the stator core (14) so as to permit the passage of cooling liquid. When the front housing (16) and the rear housing (18) are fixed to the stator core (14) by a plurality of tie bolts (34), compressive force always acts on the stator core (14) in the axial direction and does not lower sealability of the cooling liquid passages (28) defined inside the stator core (14).

# Fig. 1

## TECHNICAL FIELD

The present invention relates to a device for cooling an electric motor, and particularly to an improvement of a liquid-cooling device of an electric motor to thereby effectively absorb heat generated by a stator of the motor by a cooling liquid.

## BACKGROUND ART

Conventionally, an air-cooling or a liquid-cooling device is selectively used as a device for cooling an electric motor, depending on an operating condition of the motor. The liquid-cooling device generally provides a more effective cooling than the air-cooling device, and thus has an advantage of easily utilizing a small-sized and high-power motor when incorporated into an electric motor.

In this kind of a liquid-cooling device, for cooling a stator core arranged opposite to a rotor of the motor at outer periphery thereof, a liquid-cooling device comprising an outer casing fixed to an outer periphery of the stator core and cooling liquid passages formed within the outer casing is known, e.g., in International Patent Application No. PCT/JP90/00865. In this liquid-cooling device, however, there are instances where the cooling effect is insufficient, particularly when the motor has high heat generation value, because the outer casing is interposed between the stator core and the cooling liquid.

Another liquid-cooling device is also suggested, wherein the outer casing is omitted and the cooling liquid passages are formed directly within the stator core. This liquid-cooling device has an advantage such that the cooling liquid can directly absorb the heat from the stator core, but because the stator core has a laminated construction of a plurality of thin plates made of a magnetic material such as a silicon steel, a means for preventing a leakage of the cooling liquid from gaps between the laminated thin plates and gaps between the stator core and front and rear housings, which are respectively arranged at front and rear axial ends of the motor to support a rotating shaft of the rotor and hold the stator core, is required. At the same time, the mechanical rigidity of the stator core, in which the cooling liquid passages made by through holes are formed, must be ensured. Conventionally, as the means for preventing a leakage of the cooling liquid, a liquid-tight construction is used wherein the laminated thin plates of the stator core are fixed to one another by a resin or a bonding agent, end plates are respectively arranged at the front and rear end portions of the motor, and the outer periphery of the stator core is welded to fixedly connect the stator core and each of the end plates, whereby the stator core is tightly held between the end plates, and the rigidity of the stator is ensured by the welding the stator core and each of the front and rear end plates. In addition, the front and rear housings are fixed to the front and rear end plates by bolts, respectively, and then the cooling liquid passages passing through the front housing, the stator core and the rear housing are formed. O-rings are arranged in the cooling liquid passages between each of the end plates and the front and rear housings, respectively, and cooperate with the resin or bonding agent between the laminated thin plates of the stator core to prevent the leakage of the liquid.

As mentioned above, in the conventional liquid-cooling device, the arrangement of the end plates tightly holding the stator core, and the welding process thereof, are required to form the non-leakage cooling liquid passages, and thus the number of parts and manufacturing processes is increased. Also, when tightening the bolts fixing the front and rear end plates holding the stator core to the front and rear housings, respectively, the tension force acts on the stator core in a direction of separating the laminated thin plates from each other, whereby a sealing performance between the laminated thin plates may be damaged. Furthermore, the stator core and the end plates have different coefficients of linear expansion, because they are generally made of the different material, whereby an adhesiveness between the stator core and the end plates may be damaged as temperature changes are repeated, and thus the sealing performance of the cooling liquid passages may be damaged.

## DISCLOSURE OF THE INVENTION

An object of the present invention is to provide a liquid-cooling device of an electric motor having a cooling liquid passage that can effectively cool a stator core of the motor and maintain a high liquid-tightness without damaging a rigidity of a motor housing.

To accomplish the above object, the present invention provides a liquid-cooling device of an electric motor for cooling the motor by a cooling liquid, the motor including a rotor and a stator arranged with a predetermined gap between the stator and the rotor, the stator having a stator core formed by laminating a plurality of thin plates of a magnetic material and adhering them closely to one another by impregnating a resin material therebetween, comprising a front housing and a rear housing respectively arranged at an axial front end and an axial rear end of the motor, for rotatably supporting a rotating shaft of the rotor and axially holding the stator core therebetween; a tightening means for tightening the front and rear housings onto the stator core so as to draw the front and rear housings together; a cooling liquid passage means formed within the stator core for circulating the cooling liquid; and a cooling liquid supply means and discharge means.

According to the preferred embodiment of the present invention, the liquid-cooling device is provided wherein the tightening means comprises a plurality of bolt through holes formed continuously in the front housing, the stator core and the rear housing; threaded portions formed in either bolt through holes of the front housing or those of the rear housing; and a plurality of tie-bolts inserted into each of the bolt through holes and engaged with the threaded portions, to thereby fix and tighten the front and rear housings onto the stator core so as to draw the front and rear housings together.

Conveniently, the cooling liquid passage means may comprise a plurality of cooling liquid passages axially extending within the stator core and arranged separately from one another in a circumferential direction, and the supply means and the discharge means of the cooling liquid may respectively comprise a cooling liquid supply port and a cooling liquid discharge port arranged at either the front or rear housing for supplying and discharging the cooling liquid.

In the above constructions, when the front and rear housings holding the stator core therebetween are fixed to the stator core by the tightening means drawing the front and rear housings mutual together, the stator core is continually subjected to an axial compression force. Therefore, the stator core is maintained in a high sealed condition between the thin plates thereof, and the sealing performance of the cooling liquid passage means formed within the stator core is not damaged.

BRIEF EXPLANATION OF THE DRAWINGS

The foregoing and other objects, features, and advantages of the present invention will be described in relating with the embodiments shown in the accompanying drawing, in which;

Fig. 1 is a longitudinal sectional view of an electric motor having a liquid-cooling device according to the present invention, taken along a line I-I of Fig. 2;

Fig. 2 is an elevational view of a laminated thin plate constituting a stator core of the motor shown in Fig. 1; and

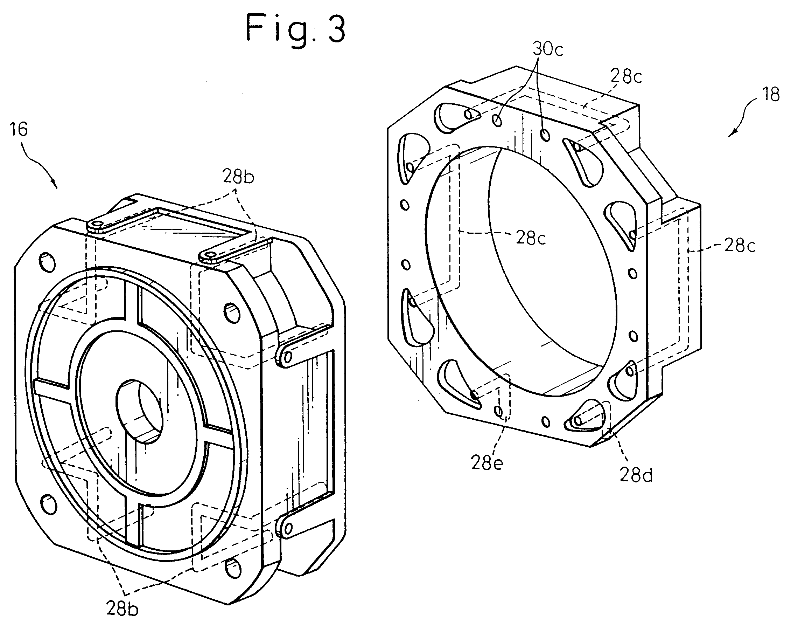

Fig. 3 is a schematic perspective view showing cooling liquid passages of front and rear housings of the motor shown in Fig. 1.

BEST MODE OF CARRYING OUT THE INVENTION

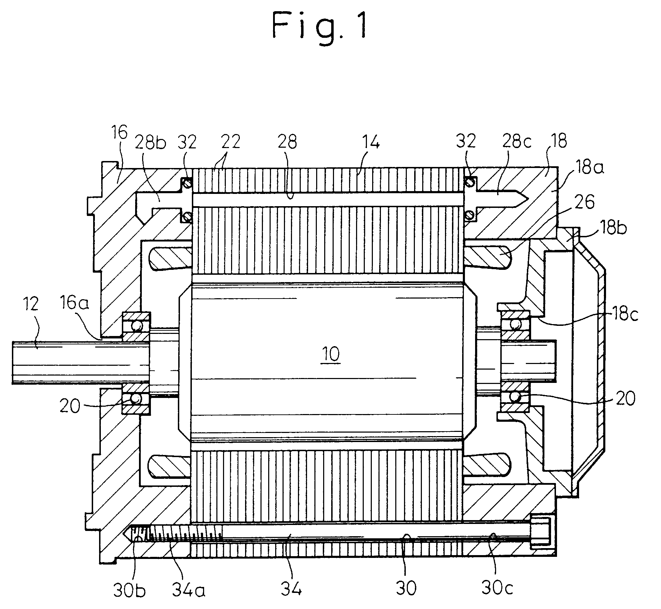

Referring to the drawings, Fig. 1 sectionally shows an electric motor having a liquid-cooling device according to the embodiment of the present invention. The motor comprises a rotor 10 arranged inside of the motor and integrated to a rotating shaft 12, a stator core 14 arranged at the outer periphery of the motor and surrounding the rotor 10 with a predetermined gap, and a front housing 16 and a rear housing 18 arranged at the front and rear axial end portions of the motor, respectively, to support the rotating shaft 12 of the rotor 10 and hold the stator core 14. The front housing 16 has a center opening 16a, and a bearing 20 is arranged in the opening 16a and rotatably supports the rotating shaft 12 integrated with the rotor 10. The rear housing 18 has an annular member 18a and a cap member 18b, and a bearing 20 is arranged in a center opening 18c of the cap member 18b and rotatably supports the rotating shaft 12 of the rotor 10. Such a separatable construction of the rear housing 18 makes it possible to perform a liquid leakage test of the liquid-cooling device before incorporating the rotor 10 within the motor, and the rear housing 18 can be regarded as a monolithic construction by strictly designing the concentricity of the annular member 18a and the cap member 18b so as to be a tight fit with each other.

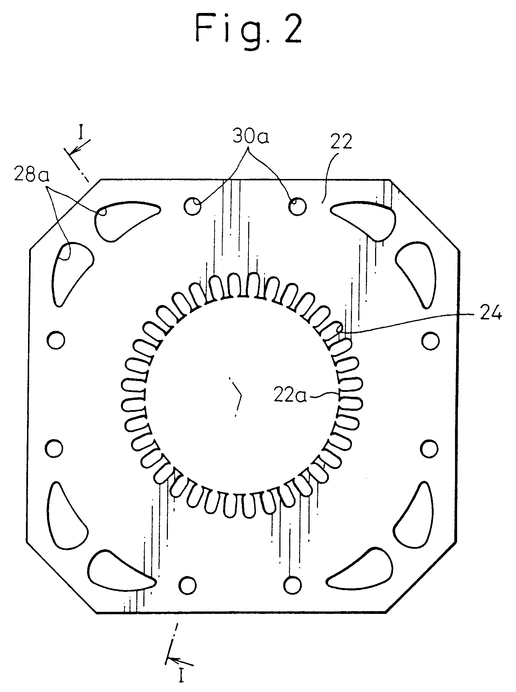

The stator core 14 is made by laminating a plularity of thin plates 22 of silicon steel (see Fig. 2) in the axial direction of the motor. The thin plate 22 has a opening 22a on the center thereof for surrounding the rotor 10, and slot holes 24 are formed at inner periphery of the opening 22a. Coils 26 (see Fig. 1) are inserted in slots formed by laminating the thin plates 22 so as to continue the slot holes 22a, whereby a stator of the motor is constructed.

In the motor having the above construction, the liquid-cooling device according to the embodiment of the present invention is provided for effectively absorbing the heat generated by the stator core 14. The liquid-cooling device has the characteristic constitution described below for forming cooling liquid passages directly within the stator core 14. That is, in the liquid-cooling device, the stator core 14 is formed so as to seal a small gap between the laminated thin plates by laminating thin plates each previously coated with a thermosetting bonding agent on the both sides thereof, or by vacuum-impregnating the laminated thin plates with a thermosetting resin and properly heating same.

As shown in Fig. 2, the thin plate 22 has a plurality of cooling liquid passage holes 28a and bolt holes 30a adjacent to a periphery thereof, and the cooling liquid passage holes 28a and the bolt holes 30a are continued by laminating the thin plates 22, thereby cooling liquid passages 28 and bolt through holes 30, each of which axially extends within the stator core 14, are formed. In this embodiment, a pair of cooling liquid passage holes 28a is arranged at each of four corners of the thin plate 22 and a pair of bolt holes 30a is arranged between each of the pair of cooling liquid passage holes 28a, and the cooling liquid passages 28 and the bolt through holes 30 are formed correspondingly within the stator core 14. Furthermore, the front housing 16 holding the stator core 14 has connecting passages 28b and threaded bores 30b at the position corresponding to the cooling liquid passages 28 and the bolt through holes 30, respectively, and the rear housing 18 has connecting passages 28c and through holes 30c arranged in the same manner. As mentioned above, the bolt through holes 30, the threaded bores 30b, and the through holes 30c are formed separately from the passages of the cooling liquid, and therefore, it is unnecessary for the through holes 30c of the rear housing 18 to be provided with specific sealing constructions.

The connecting passages 28b and 28c of the front housing 16 and the rear housing 18 connect the cooling liquid passages 28 arranged at the four corners of the thin plate 22 each other (see Fig. 2). The rear housing 18 is provided with a cooling liquid supply port 28d and a cooling liquid discharge port 28e each connected to a cooling liquid supply source (not shown) arranged outside of the motor, and these ports 28d and 28e are used for supplying the cooling liquid into the cooling liquid passages 28 of the stator core 14 and discharging the cooling liquid out of the cooling liquid passages 28, respectively. In this manner, a continuously extending passage of the cooling liquid is formed from the cooling liquid supply port 28d to the cooling liquid discharge port 28e via the cooling liquid passages 28 and the connecting passages 28b and 28c. The direction in which the cooling liquid is circulated in the continued passage is optional, and thus the positions of the cooling liquid supply port 28d and the cooling liquid discharge port 28e can be changed. As shown in Fig. 1, well known O-rings 32 are arranged at each of the connecting portions of the cooling liquid passages 28 of the stator core 14 with the connecting passages 28b of the front housing 16 and with the connecting passages 28c, the cooling liquid supply port 28d, and the cooling liquid discharge port 28e of the rear housing 18, to thus ensure the sealing performance of each of the connecting portions.

As shown in Fig. 1, a plurality of tie-bolts 34 are inserted into the bolt through holes 30 of the stator core 14 via the through holes 30c of the rear housing 18, and threaded end portions 34a of the tie-bolts 34 are mated with the threaded bores 30b of the front housing 16, so that the front housing 16 and the rear housing 18 are tightened onto and firmly fixed to the stator core 14.

In the liquid-cooling device having the above construction, the passage of the cooling liquid, consisting of the cooling liquid passages 28, the connecting passages 28b of the front housing 16, and the connecting passages 28c, the cooling liquid supply port 28d, and the cooling liquid discharge port 28e of the rear housing 18, can be given a high sealing performance by the resin or bonding agent applied between the thin plates and the O-rings 32 arranged between the cooling liquid passages 28 and the connecting passages 28b, 28c, the cooling liquid supply port 28d and the cooling liquid discharge port 28e. Furthermore, different from a conventional cooling device, a tightening force of the tie-bolts 34 for fixing the front housing 16 and the rear housing 18 to the stator core 14 acts to compress the stator core 14 in the axial direction, and thus can be firmly tightened together without damaging the sealing performance of the passage of the cooling liquid.

As clear from the above descriptions, according to the present invention, a liquid-cooling device is provided, which can effectively cool a stator core of an electric motor because the cooling liquid passages are formed directly within the stator core, and a high sealing performance of the passage of a cooling liquid can be maintained without damaging a rigidity of a motor housing because long tie-bolts are used for fixing the stator core to the front and rear housings to thus compressibly hold the stator core between the front and rear housings. Furthermore, the front and rear housings supporting a rotating shaft of a rotor act as end plates holding the stator core, whereby the end plates can be omitted and a welding process can be eliminated, and therefore, the cost of the liquid-cooling device can be lowered by reducing the number of parts and manufacturing processes.

LIST OF REFERENCE NUMERALS

| 10 | rotor |
| 14 | stator core |
| 16 | front housing |
| 18 | rear housing |
| 22 | thin plate |
| 28 | cooling liquid passage |
| 28b, 28c | connecting passage |
| 28d | cooling liquid supply port |
| 28e | cooling liquid discharge port |
| 30 | bolt through hole |
| 30b | threaded bore |
| 30c | through hole |
| 32 | O-ring |
| 34 | tie-bolt |

**Claims**

1. A liquid-cooling device of an electric motor for cooking the motor by a cooling liquid, the motor including a rotor and a stator arranged with a predetermined gap between the stator and the rotor, the stator having a stator core formed by laminating a plurality of thin plates of a magnetic material and adhering them closely to one another by impregnating a resin material therebetween, comprising:

a front housing and a rear housing respectively arranged at an axial front end and an axial rear end of the motor, for rotatably supporting a rotating shaft of the rotor and axially holding the stator core therebetween;

a tightening means for tightening said front and rear housings onto the stator core so as to draw said front and rear housings together;

a cooling liquid passage means formed within the stator core for circulating the cooling liquid; and

a cooling liquid supply means and discharge means.

2. A liquid-cooling device of an electric motor as claimed in claim 1, wherein said tightening means comprises a plurality of bolt through holes formed continuously in the front housing, the stator core and the rear housing, threaded portions formed in either said bolt through holes of the front housing or those of the rear housing, and a plurality of tie-bolts inserted into each of said bolt through holes and engaged with said threaded portions to thereby fix and tighten the front and rear housings onto the stator core so as to draw the front and rear housings together.

3. A liquid-cooling device of an electric motor as claimed in claim 1, wherein said cooling liquid passage means comprises a plurality of cooling liquid passages axially extending within the stator core and arranged separately from one another in a circumferential direction, and wherein said supply means and said discharge means of the cooling liquid respectively comprise a cooling liquid supply port and a cooling liquid discharge port arranged at either said front housing or said rear housing for supplying and discharging the cooling liquid.

4. A liquid-cooling device of an electric motor as claimed in claim 3, wherein each of said front housing and said rear housing is provided with a plurality of connecting passages for connecting said adjacent cooling liquid passages to each other, whereby a continuous passage circulating the cooling liquid therein is formed from said cooling liquid supply port to said cooling liquid discharge port via said cooling liquid passages and said connecting passages.

5. A liquid-cooling device of an electric motor as claimed in claim 4, wherein O-rings are arranged at each of connecting portions between said cooling liquid passages and said cooling liquid supply port, said cooling liquid discharge port and said connecting passages.

# Fig.1

# Fig. 2

EP 0 503 093 A1

Fig. 3

9

# INTERNATIONAL SEARCH REPORT

International Application No  PCT/JP91/01343

**I. CLASSIFICATION OF SUBJECT MATTER** (if several classification symbols apply, indicate all) 6

According to International Patent Classification (IPC) or to both National Classification and IPC

Int. Cl$^5$  H02K9/19

**II. FIELDS SEARCHED**

| Minimum Documentation Searched 7 | |
|---|---|
| Classification System | Classification Symbols |
| IPC | H02K9/00, H02K1/00, H02K5/00 |

Documentation Searched other than Minimum Documentation
to the Extent that such Documents are Included in the Fields Searched 8

| | |
|---|---|
| Jitsuyo Shinan Koho | 1926 - 1991 |
| Kokai Jitsuyo Shinan Koho | 1971 - 1991 |

**III. DOCUMENTS CONSIDERED TO BE RELEVANT** 9

| Category * | Citation of Document, 11 with indication, where appropriate, of the relevant passages 12 | Relevant to Claim No. 13 |
|---|---|---|
| Y | JP, A, 60-102827 (Fanuc Ltd.), June 7, 1985 (07. 06. 85), (Family: none) | 1-5 |
| Y | JP, A, 61-121729 (Fanuc Ltd.), June 9, 1986 (09. 06. 86) & WO, A1, 8603069 & US, A, 4745314 | 1-5 |
| Y | JP, A, 1-198243 (Fanuc Ltd.), August 9, 1989 (09. 08. 89), (Family: none) | 1-5 |
| Y | JP, A, 2-55551 (Fanuc Ltd.), February 23, 1990 (23. 02. 90), (Family: none) | 1-5 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| December 5, 1991 (05. 12. 91) | December 24, 1991 (24. 12. 91) |

| International Searching Authority | Signature of Authorized Officer |
|---|---|
| Japanese Patent Office | |

Form PCT/ISA/210 (second sheet) (January 1985)